# EUROPÄISCHE PATENTSCHRIFT

(11) **EP 2 478 805 B1**
(45) Veröffentlichungstag und Bekanntmachung des Hinweises auf die Patenterteilung: **21.05.2014**
(21) Anmeldenummer: 12150458.3
(22) Anmeldetag: 09.01.2012
(51) Int. Cl.: A47J 31/44

(54) **Getränkeautomat**
Drinks machine
Automate à boissons

(30) Priorität: 24.01.2011 DE 102011003070
(43) Veröffentlichungstag der Anmeldung: 25.07.2012
(73) Patentinhaber: WMF Württembergische Metallwarenfabrik AG, 73309 Geislingen/Steige (DE)
(72) Erfinder: Startz, Armin, 89197 Weidenstetten (DE); Arndt, Peter, 89134 Blaustein (DE); Jäger, Michael, 73329 Kuchen (DE)
(74) Vertreter: BRP Renaud & Partner

(56) Entgegenhaltungen:
- EP-A1- 1 656 863
- DE-U1- 8 027 645

## Beschreibung

Die vorliegend Erfindung betrifft einen Getränkeautomat, insbesondere einen Kaffeevollautomaten, mit einer Verstelleinrichtung zur Höheneinstellung eines Tassenpodest gemäß dem Oberbegriff des Anspruchs 1. Die Erfindung betrifft außerdem eine Verstelleinrichtung für einen derartigen Getränkeautomaten sowie eine Magnetbremse für eine solche Verstelleinrichtung.

Verschiedene Tassenhöhen und eine zunehmende Vielfalt an herzustellenden Getränken, machen es erforderlich, eine Auslaufhöhe eines Getränkeautomatens, insbesondere einer Kaffeemaschine, einstellbar zu gestalten. Die meisten Getränkeautomaten bzw. Kaffeemaschinen arbeiten deswegen mit in der Höhe verstellbaren Ausläufen. Diese Ausläufe werden jedoch immer komplexer, da zunehmend Leitungen von Dampfkesseln, Milchgefäßen, Schokomixgetränken, Sirup oder Kaffee im Auslaufbereich des Getränkeautomatens münden. Die Höhenverstellung derart komplexer Ausläufe wird dadurch immer schwieriger und störanfälliger, zumal Teile der Ausläufe vom Kunden teils täglich gereinigt werden müssen, was die Komplexität zusätzlich steigert. Neue Generationen von Getränkeautomaten arbeiten deshalb bereits mit in der Höhe verstellbaren Tassenpodesten. Eine Kaffeemaschine mit einer Höhenverstellung ist z.B. aus der DE 8027645 U bekannt.

Die vorliegende Erfindung beschäftigt sich mit dem Problem, für einen Getränkeautomaten der gattungsgemäßen Art eine verbesserte oder zumindest eine alternative Ausführungsform anzugeben, die sich insbesondere durch eine einfache Handhabung auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, bei einem Getränkeautomaten mit einer an sich bekannten Verstelleinrichtung zur Höheneinstellung eines Tassenpodestes, zwei parallele, vertikale Zahnriemen-/Kettentriebe vorzusehen, die an einem oberen/unteren Ende über eine Welle drehfest miteinander verbunden sind. Das zugehörige höhenverstellbare Tassenpodest weist seitliche Führungsschlitten auf, die mit dem jeweils zugeordneten Zahnriemen-/Kettentrieb koppelbar sind. Der erfindungsgemäße Getränkeautomat ermöglicht somit eine klemmfreie, da zweifach geführte Verstellung des Tassenpodests, wobei die seitliche Führung des Tassenpodestes zudem einen Bereich einer Aufstellfläche des Tassenpodestes, in welchem sich üblicherweise ein Satzbehälter befindet, der vom Kunden teils mehrmals täglich entleert werden muss, freihält. Zum Leeren des Satzbehälters muss somit der Nutzer des Getränkeautomatens lediglich das Tassenpodest nach unten fahren und nicht wie bisher umständlich abmontieren. Durch die zweiseitige Führung und die Verbindung der beiden Zahnriemen/Kettentriebe über die vorzugsweise obenliegende Welle kann zudem ein Verklemmen, selbst bei einer einseitigen Betätigung des Tassenpodestes, vermieden werden, wodurch sich insgesamt die Nutzung und Handhabung des erfindungsgemäßen Getränkeautomatens und der erfindungsgemäßen Verstelleinrichtung deutlich vereinfachen.

Bei einer vorteilhaften Weiterbildung der erfindungsgemäßen Lösung, ist das Tassenpodest zusammen mit den Führungsschlitten von der Verstelleinrichtung abnehmbar und/oder die Verstelleinrichtung ist vom Getränkeautomaten abnehmbar. Beide Ausführungsformen gewährleisten eine einfache Entnahme der jeweiligen Komponente zu Reinigungszwecken, wodurch die Nutzung und insbesondere auch die Wartung des erfindungsgemäßen Getränkeautomatens, insbesondere für Laien, deutlich vereinfacht wird. Die leichte Abnehmbarkeit des Tassenpodestes bzw. der Verstelleinrichtung ist unabdingbar, da es insbesondere im Bereich des Tassenpodeste leicht zu Verschmutzungen, beispielsweise bei überlaufenden Getränkebehältern, kommen kann. Mit der flexiblen Demontagemöglichkeit des Tassenpodestes bzw. der Verstelleinrichtung wird somit dem Kunden die Nutzung des Getränkeautomatens deutlich erleichtert.

Zweckmäßig ist im Bereich des Zahnriemen/Kettentriebs eine Magnetbremse vorgesehen, die eine Bewegung des Tassenpodests nach unten abbremst. Diese Magnetbremse bringt bei der Bewegung nach unten ein Haltemoment auf, was bedeutet, dass das Absenken des Tassenpodestes bis zu einer vorbestimmten Kraft, beispielsweise bis zu 20 N, verhindert wird. Die Magnetbremse funktioniert dabei dahingehend, dass ein magnetisches Rastmoment (Haltemoment) erzeugt wird. Setzt sich beim Überschreiten dieses Rastmoments eine Welle der Magnetbremse in Bewegung, so heben sich die magnetischen Anzugs- und Abstoßkräfte der Magnetbremse annähernd auf, bzw. reduzieren das Bremsmoment auf einen deutlich kleineren Wert als das Rastmoment. Um die notwendigen Drehmomente von der Welle des Zahnriemen-/Kettentriebs auf die Magnetbremse reduzieren zu können, kann innerhalb der Magnetbremse ein Getriebe vorgesehen sein. Zusätzlich kann ein Freilauf vorgesehen werden, der eine freie Aufwärtsbewegung des Tassenpodestes ermöglicht und bei einer Aufwärtsbewegung des Tassenpodestes die Magnetbremse außer Kraft setzt, da hier kein Haltemoment und auch kein Bremsmoment benötigt wird. Zur Verbesserung einer Haptik bei der Verstellbewegung kann eine zusätzliche Schwungmasse in/an der Magnetbremse angeordnet werden, die beispielsweise wie ein Friktionsantrieb bei Spielzeugautos wirkt und dadurch einen wertigen Anlauf sowie einen sanften Auslauf gewährleistet.

Bei einer weiteren vorteilhaften Ausführungsform der erfindungsgemäßen Lösung, kann die Verstelleinrichtung manuell oder mittels eines entsprechenden Motors verstellbar sein. Je nach Ausstattungslinie des Getränkeautomatens bzw. der zugehörigen Verstelleinrichtung kann somit ein rein manuelle oder ein motorisch unterstütztes Höhenverstellen des Tassenpodestes erfolgen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung, wie in den Ansprüchen definiert, zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine erfindungsgemäße Verstelleinrichtung für einen Getränkeautomaten,
- Fig. 2: eine Detaildarstellung eines Führungsschlittens in einer zugehörigen Führungsbahn,
- Fig. 3: eine Darstellung wie in Fig. 2, jedoch aus einer anderen Perspektive,
- Fig. 4: eine Schnittdarstellung durch eine erfindungsgemäße Magnetbremse.

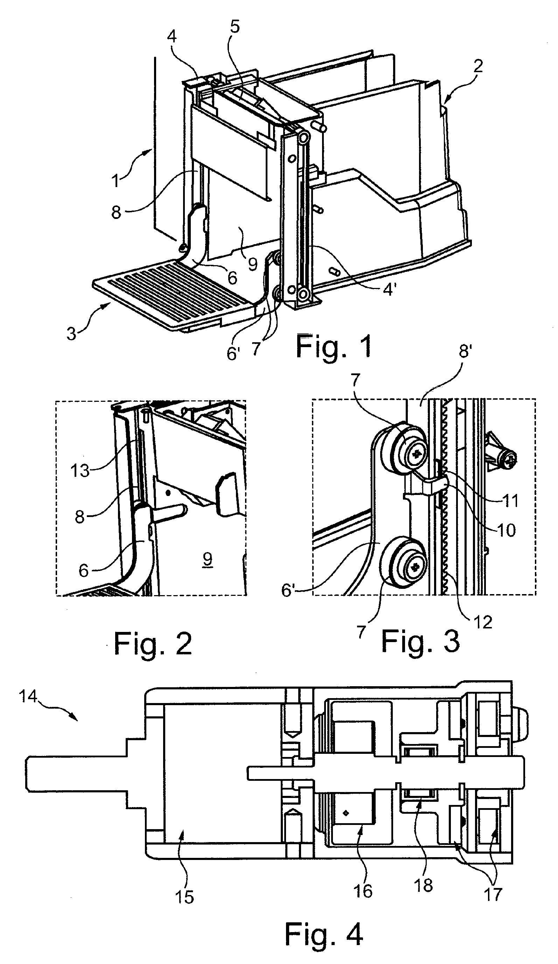

Entsprechend der Fig. 1, weist ein erfindungsgemäßer Getränkeautomat 1, der beispielsweise als Kaffeevollautomat ausgebildet sein kann, eine Verstelleinrichtung 2 zur Höheneinstellung eines Tassenpodestes 3 auf. Die erfindungsgemäße Verstelleinrichtung 2 besitzt zwei parallele, vertikale Zahnriemen-/Kettentriebe 4 und 4', die an einem oberen Ende über eine Welle 5 drehfest miteinander verbunden sind. Die Welle 5 gewährleistet dabei eine gleichmäßige Verstellung der beiden Zahnriemen-/Kettentriebe 4 und 4'. Zusätzlich weist das Tassenpodest 3 zwei seitliche Führungsschlitten 6 und 6' auf, die mit dem jeweils zugeordneten Zahnriemen-/Kettentrieb 4, 4' koppelbar sind. Die beiden Führungsschlitten 6, 6' besitzen dabei jeweils zwei Rollen 7 (vgl. auch Fig. 3), mit welchen sie in zugehörigen Führungsbahnen 8, 8' der Verstelleinrichtung 2 geführt sind.

Durch die beidseitige Führung des Tassenpodestes 3 über die beiden Führungsschlitten 6, 6', kann ein verkantungsfreies Verstellen des Tassenpodestes 3 erreicht werden, selbst wenn dieses an lediglich einer Seite angehoben bzw. abgesenkt wird. Zugleich bietet die erfindungsgemäße Ausgestaltung und Lagerung des Tassenpodestes 3 über die zwei seitlichen Führungsschlitten 6, 6' den großen Vorteil, dass ein dahinter angeordneter Raum 9, in welchem üblicherweise eine Satzbehälter angeordnet ist, frei zugänglich bleibt, so dass zu einem Leeren des Satzbehälters die Verstelleinrichtung 2 bzw. das Tassenpodest 3 nicht mehr wie bisher unter Umständen abgenommen werden müssen. Das Tassenpodest 3 ist bei der erfindungsgemäßen Verstelleinrichtung 2 sowohl händisch als auch mittels eines nicht gezeigten Motors, das heißt motorisch, verstellbar. Zugleich ist das Tassenpodest 3 zusammen mit den Führungsschlitten 6 und 6' von der Verstelleinrichtung 2 abnehmbar, in dem die Führungsschlitten 6, 6' aus dem zugehörigen Führungsbahnen 8, 8' ausgefahren werden. Zusätzlich oder alternativ ist auch die Verstelleinrichtung 2 vom Getränkeautomaten 1 abnehmbar, wodurch eine besonders einfache Reinigung und damit eine einfache Handhabung ermöglicht werden.

Betrachtet man die Fig. 1 und 2, so kann man erkennen, dass die Führungsbahnen 8, 8' in einem zu Reinigungszwecken von vorne leicht zugänglichen Bereich liegen, wogegen die vertikalen Zahnriemen-/Kettentriebe 4, 4' (vgl. Fig. 3) verdeckt angeordnet sind, das heißt nicht ohne weiteres zugänglich sind, dafür aber vor Verschmutzungen geschützt angeordnet werden können.

Gemäß der Fig. 3 ist erkennbar, dass an jedem Führungsschlitten, hier am Führungsschlitten 6', ein Greifelement 10 angeordnet ist, mit welchem eine Verbindung zum zugehörigen Zahnriemen-/Kettentrieb 4, 4' herstellbar ist, in dem Greifelement 10 in eine Aussparung 11 am zugehörigen Zahnriemen 12 oder an einer zugehörigen Ketten des Zahnriemen-/Kettentriebs 4, 4' eingreift. Das Greifelement 10 ist dabei in der Art einer Fangnase ausgebildet und taucht nur durch eine vergleichsweise kleine Nut 13 (vgl. Fig. 2) zwischen der Führungsbahn 8, 8' und dem Zahnriemen-/Kettentrieb 4, 4' durch. Generell kann der Führungsschlitten 6, 6' in seiner untersten Position einfach aus der zugehörigen Führungsbahn 8, 8' ausgeschwenkt und damit das Tassenpodest 3 entnommen werden. Mit einer einfachen Schraube kann hierbei optional festgelegt werden, ob die Entnahme für den Kunden oder lediglich durch einen Servicetechniker machbar sein soll.

Sollte sich zur Montage des Tassenpodests 3 über die Führungsschlitten 6, 6' zwischenzeitlich der zugehörige Zahnriemen 12 in einer anderen Position befinden, beispielsweise durch eine motorische Verstellung oder eine Verstellung beim Reinigen, so kann der Führungsschlitten 6, 6' in die Führungsbahn 8, 8' eingesetzt und händisch nach oben gefahren werden. Durch die Geometrie an jedem Führungsschlitten 6, 6' angeordneten Greifelementes 10 und der Tatsache, dass der Zahnriemen 12 nach unten bewegt werden kann, ist ein erneutes Einrasten in jeder Riemenposition möglich. Die Geometrie zwischen der Ausnehmung 11 am Zahnriemen 12 bzw. der Kette und des Greifelementes 10 ist auf jeden Fall so gestaltet, dass eine Lösung nur durch das Ausschwenken des Führungsschlittens 6, 6' in seiner untersten Position möglich ist.

Die erfindungsgemäße Verstelleinrichtung 2 und der zugehörige erfindungsgemäße Tassenpodest 3 ermöglichen eine einfache Reinigung, insbesondere durch ein einfaches Abnehmen dieser Komponenten vom Getränkeautomaten 1, ebenso wie eine klemmfreie Höhenverstellung des Tassenpodests 3, da ein Verkanten der Führungsschlitten 6, 6' mittels der beiden über die Welle 5 miteinander gekoppelten Zahnriemen-/Kettentriebe 4, 4' zuverlässig ausgeschlossen werden kann. Wird nämlich das Tassenpodest 3 einseitig bewegt, so wird über die gemeinsame Welle die Bewegungskraft auf die andere Seite, das heißt auf den anderen Führungsschlitten 6, 6' weitergegeben.

Über die gemeinsame Welle 5 lassen sich nun auch diverse Halte- und Antriebskomponenten realisieren, z.B. eine Magnetbremse 14, wie diese gemäß der Fig. 4 dargestellt ist, Motoren, Getriebe, Schlingfederkupplungen, etc.. Im Bereich des Zahnriemen-/Kettentriebs 4, 4' und insbesondere im Bereich der Welle 5 kann somit die vorgenannte Magnetbremse 14 vorgesehen sein, die eine Bewegung des Tassenpodests 3 nach unten abbremst. In die entgegengesetzte Drehrichtung weist die Magnetbremse 14 einen Freilauf 18 auf, so dass eine Bewegung des Tassenpodests 3 nach oben ungebremst möglich ist. Die Magnetbremse 14 ist dabei vorzugsweise an die Welle 5 des Zahnriemen-/Kettentriebs 4, 4' angeflanscht.

Die Magnetbremse 14 kann darüber hinaus ein Getriebe 15, insbesondere ein Übersetzungsgetriebe, aufweisen, ebenso wie eine Schwungmasse 6. Mit dem Getriebe 15 wird eine Vergrößerung der Drehzahl gegenüber einer Wellendrehzahl erreicht. Die integrierte Magnetbremse 14 bringt bei der Bewegung des Tassenpodests 3 nach unten ein Haltemoment auf, das heißt das Absenken des Tassenpodestes 3 soll bis zu einer bestimmten Kraft, vorzugsweise bis zu 20 N, verhindert werden. Die Magnetbremse 14 funktioniert dahingehend, dass ein magnetisches Rastmoment (Haltemoment) vorliegt, wobei sich beim Überschreiten dieses Haltemoments die angetriebene Welle 5 in Bewegung setzt und sich dadurch die magnetischen Anzugs- und Abstoßkräfte einer Rastbremse 17 annähernd aufheben bzw. ein Bremsmoment auf einen deutlich kleineren Wert als ein Rastmoment reduzieren. Durch das Getriebe 15 können zusätzlich die notwendigen Drehmomente von der Welle 5 des Zahnriemen-/Kettentriebs 4, 4' auf die Magnetbremse 14, das heißt die Rastbremse 17, reduziert werden. Zur Verbesserung der Haptik bei der Verstellung kann zusätzlich weiter oben erwähnte Schwungmasse 16 vorgesehen werden, die wie ein Friktionsantrieb reagiert und dadurch einen wertigen Anlauf sowie einen sanften Auslauf gewährleistet.

Eine derartige Magnetbremse 14 kann generell auch an anderer Stelle des Getränkeautomaten 1 eingesetzt werden, insbesondere etwa zum Halten und/oder Bremsen einer Frontblende, von Türen, Klappen oder Verkleidungsteilen. Vorteilhafterweise wird eine derartige Magnetbremse 14 bei solchen teilen eingesetzt, die entgegen der Schwerkraft gehalten und/oder gebremst werden sollen. Die Magnetbremse 14 kann dabei Rastschritte aufweisen, aber auch eine zu- oder abnehmende Bremswirkung in eine Richtung.

## Patentansprüche

1. Getränkeautomat (1), insbesondere ein Kaffeevollautomat, mit einer Verstelleinrichtung (2) zur Höheneinstellung eines Tassenpodests (3), **dadurch gekennzeichnet,**
- **dass** die Verstelleinrichtung (2) zwei parallele, vertikale Zahnriemen-/Kettentriebe (4,4') aufweist, die an einem oberen/unteren Ende über eine Welle (5) drehfest miteinander verbunden sind,
- **dass** das Tassenpodest (3) zwei seitlich Führungsschlitten (6,6') aufweist, die mit dem jeweils zugeordneten Zahnriemen-/Kettentrieb (4,4') koppelbar sind.

2. Getränkeautomat nach Anspruch 1,
**dadurch gekennzeichnet,**
**dass** die beiden Führungsschlitten (6,6') jeweils zwei Rollen (7) aufweisen, mit welchen sie in zugehörigen Führungsbahnen (8,8') geführt sind.

3. Getränkeautomat nach Anspruch 1 oder 2,
**dadurch gekennzeichnet,**
- **dass** das Tassenpodest (3) zusammen mit den Führungsschlitten (6,6') von der Verstelleinrichtung (2) abnehmbar ist, und/oder
- **dass** die Verstelleinrichtung (2) vom Getränkeautomaten (1) abnehmbar ist.

4. Getränkeautomat nach Anspruch 2 oder 3,
**dadurch gekennzeichnet,**
**dass** die Führungsbahnen (8,8') in einem zu Reinigungszwecken zugänglichen Bereich liegen, wogegen die vertikalen Zahnriemen-/Kettentriebe (4,4') verdeckt angeordnet sind.

5. Getränkeautomat nach einem der Ansprüche 1 bis 4,
**dadurch gekennzeichnet,**
**dass** an jedem Führungsschlitten (6,6') ein Greifelement (10) angeordnet ist, mit welchem eine Verbindung zum zugehörigen Zahnriemen-/Kettentrieb (4,4') herstellbar ist, indem das Greifelement in eine Aussparung am zugehörigen Zahnriemen (12) oder an einer zugehörigen Kette des Zahnriemen-/Kettentriebs (4,4') eingreift.

6. Getränkeautomat nach einem der Ansprüche 1 bis 5,
**dadurch gekennzeichnet,**
**dass** die Verstelleinrichtung (2) manuell oder mittels eines Motors verstellbar ist.

7. Getränkeautomat nach einem der Ansprüche 1 bis 6,
**dadurch gekennzeichnet,**
**dass** im Bereich des Zahnriemen-/Kettentriebs (4,4') eine Magnetbremse (14) vorgesehen ist, die eine Bewegung des Tassenpodests (3) nach unten abbremst.

8. Getränkeautomat nach Anspruch 7,
**dadurch gekennzeichnet,**
**dass** die Magnetbremse (14) in eine Drehrichtung einen Freilauf (18) aufweist, so dass eine Bewegung des Tassenpodests (3) nach oben ungebremst möglich ist.

9. Getränkeautomat nach Anspruch 7 oder 8,
**dadurch gekennzeichnet,**
**dass** die Magnetbremse (14) an die Welle (5) des Zahnriemen-/Kettentriebs (4,4') angeflanscht ist.

10. Getränkeautomat nach einem der Ansprüche 7 bis 9,
**dadurch gekennzeichnet,**
**dass** die Magnetbremse (14) ein Getriebe (15) und eine Schwungmasse (16) aufweist.

11. Verstelleinrichtung (2) für einen Getränkeautomaten (1) nach einem der Ansprüche 1 bis 10.

## Claims

1. A beverage machine (1), in particular a fully automatic coffee machine, comprising an adjusting device (2) for height-adjusting a cup platform (3), **characterized in**
- **that** the adjusting device (2) encompasses two parallel, vertical geared belt/chain drives (4, 4'), which are connected to one another in a torque-proof manner at an upper/lower end via a shaft (5),
- **that** the cup platform (3) encompasses two lateral guide carriages (6, 6'), which can be coupled to the respective assigned geared belt/chain drive (4, 4').

2. The beverage machine according to claim 1, **characterized in**
**that** the two guide carriages (6, 6') in each case encompass two rollers (7), by means of which they are guided in corresponding guide tracks (8, 8').

3. The beverage machine according to claim 1 or 2, **characterized in**
- **that**, together with the guide carriages (6, 6'), the cup platform (3) can be removed from the adjusting device (2) and/or
- **that** the adjusting device (2) can be removed from the beverage machine (1).

4. The beverage machine according to claim 2 or 3,
**characterized in**
**that** the guide tracks (8, 8') are located in an area, which can be accessed for cleaning purposes, whereas the vertical geared belt/chain drives (4, 4') are arranged so as to be covered.

5. The beverage machine according to one of claims 1 to 4,
**characterized in**
**that** a gripper element (10), by means of which a connection to the corresponding geared belt/chain drive (4, 4') can be established, is arranged at each guide carriage (6, 6'), in that the gripper element engages with a recess at the corresponding geared belt (12) or at a corresponding chain of the geared belt/chain drive (4, 4').

6. The beverage machine according to one of claims 1 to 5, **characterized in**
**that** the adjusting device (2) can be adjusted manually or by means of a motor.

7. The beverage machine according to one of claims 1 to 6, **characterized in**
**that** provision is made in the area of the geared belt/chain drive (4, 4') for a magnetic brake (14), which brakes a downward movement of the cup platform (3) .

8. The beverage machine according to claim 7,
**characterized in**
**that**, in a direction of rotation, the magnetic brake (14) encompasses a freewheel assembly (18), so that an upward movement of the cup platform (3) is possible in an unbraked manner.

9. The beverage machine according to claim 7 or 8,
**characterized in**
**that** the magnetic brake (14) is flange-mounted to the shaft (5) of the geared belt/chain drive (4, 4').

10. The beverage machine according to one of claims 7 to 9,
**characterized in**
**that** the magnetic brake (14) encompasses a drive (15) and a flywheel mass (16).

11. An adjusting device (2) for a beverage machine (1) according to one of claims 1 to 10.

## Revendications

1. Distributeur de boissons (1), notamment distributeur de café entièrement automatique, avec un système d'ajustage (2) pour le réglage en hauteur d'un socle à tasses (3), **caractérisé en ce que**
- le système d'ajustage (2) comporte deux transmissions parallèles, verticales à courroie crantée/à chaîne qui sur une extrémité supérieure/inférieure sont reliées l'une à l'autre de manière solidaire en rotation par l'intermédiaire d'un arbre (5),
- **en ce que** le socle à tasses (3) comporte deux chariots de guidage (6, 6') latéraux, que l'on peut coupler avec la transmission à courroie crantée/ à chaîne (4, 4') respectivement associée.

2. Distributeur de boissons selon la revendication 1, **caractérisé en ce que** les deux chariots de guidage (6, 6') comportent chacun deux galets (7) par l'intermédiaire desquels ils sont guidés dans des trajectoires de guidage (8, 8') correspondantes.

3. Distributeur de boissons selon la revendication 1 ou la revendication 2, **caractérisé**
- **en ce que** le socle à tasses (3) en commun avec les chariots de guidage (6, 6') est amovible sur le système d'ajustage (2) et/ou
- **en ce que** le système d'ajustage (2) est amovible sur le distributeur de boissons (1).

4. Distributeur de boissons selon la revendication 2 ou la revendication 3, **caractérisé en ce que** les trajectoires de guidage (8, 8') se situent dans une région accessible à des fins de nettoyage, alors qu'en revanche les transmissions verticales à courroie crantée/à chaîne (4, 4') sont placées en étant cachées.

5. Distributeur de boissons selon l'une quelconque des revendications 1 à 4, **caractérisé en ce que** sur chaque chariot de guidage (6, 6') est placé un élément de préhension (10), avec lequel on peut établir une liaison avec la transmission à courroie crantée/à chaîne (4, 4') correspondante, **en ce que** l'élément de préhension s'engage dans un évidement sur la courroie crantée (12) correspondante ou sur une chaîne correspondante de la transmission à courroie crantée /à chaîne (4, 4').

6. Distributeur de boissons selon l'une quelconque des revendications 1 à 5, **caractérisé en ce que** le système d'ajustage (2) s'ajuste manuellement ou au moyen d'un moteur.

7. Distributeur de boissons selon l'une quelconque des revendications 1 à 6, **caractérisé en ce que** dans la région de la transmission à courroie crantée/à chaîne (4, 44'), il est prévu un frein électromagnétique (4) qui freine un déplacement vers le bas du socle à tasse (3) .

8. Distributeur de boissons selon la revendication 7, **caractérisé en ce que** le frein électromagnétique (14) comporte dans un sens de rotation une roue libre (18), de telle sorte qu'un déplacement non freiné vers le haut du socle à tasse (3) soit possible.

9. Distributeur de boissons selon la revendication 7 ou la revendication 8, **caractérisé en ce que** le frein électromagnétique (14) est bridé sur l'arbre (5) de la transmission à courroie crantée/à chaîne (4, 4').

10. Distributeur de boissons selon l'une quelconque des revendications 7 à 9, **caractérisé en ce que** le frein électromagnétique (14) comporte une transmission (15) et une masse d'équilibrage (16).

11. Système d'ajustage (2) pour un distributeur de boissons (1) selon l'une quelconque des revendications 1 à 10.
